# EUROPEAN PATENT SPECIFICATION

(11) **EP 0 488 376 B1**
(45) Date of publication and mention of the grant of the patent: **06.11.1996**
(21) Application number: 91120528.4
(22) Date of filing: 29.11.1991
(51) Int. Cl.: B62K 25/00

(54) **Motor cycle with front wheel brake arrangement**
Motorradanordnung mit Vorderradbremse
Aménagement d'une motocyclette avec frein de roue avant

(30) Priority: 30.11.1990 JP 340846/90
(43) Date of publication of application: 03.06.1992
(73) Proprietor: YAMAHA HATSUDOKI KABUSHIKI KAISHA, Iwata-shi Shizuoka-ken, 438 (JP)
(72) Inventor: Tanaka, Toyoji, Shizuoka-ken, 438 (JP); Nakaya, Kazumasa, Shizuoka-ken, 438 (JP)
(74) Representative: Grünecker, Kinkeldey, Stockmair & Schwanhäusser Anwaltssozietät

(56) References cited:
- EP-A- 0 306 373
- DE-A- 3 723 107
- US-A- 4 526 249

## Description

The present invention relates to a motorcycle with a front wheel brake arrangement comprising a steering knuckle located at one side of a front wheel for supporting same, a swing arm with which said steering knuckle is vertically moveably supported by a body frame, a brake disc provided for rotation with said front wheel, and a caliper brake adapted to frictionally engage the brake disc and supported on a bracket mounted on said steering knuckle, whereby said caliper brake is disposed between said front wheel and said steering knuckle. Particularly, the present invention relates to such a motorcycle having a front wheel brake provided in a swing arm-type, front wheel suspension device.

A swing arm-type, front wheel suspension device of a motor cycle is generally equipped with a steering knuckle for supporting the front wheel at one side thereof. The steering knuckle is vertically moveably supported with a swing arm by a body frame. A handle is connected to the steering knuckle for steering (for example, US 4,526,249).

The above described front wheel is generally provided with a brake device which has been hitherto constructed as follows. Namely, a brake disc is provided for rotation with the front wheel and a caliper brake is provided for frictional engagement with this brake disc. The caliper brake is supported on a bracket which is protruded forwardly from the steering knuckle.

In the above conventional construction, the caliper brake is positioned at a front lower side of the steering knuckle and is exposed outwardly, so that there is a possibility that the caliper brake is contacted with obstacles during manual displacing of the motorcycle.

Further, the steering knuckle is disposed adjacent to the steering axis for the purpose of minimising the moment of inertia about the steering axis of the front wheel. Since, however, the caliper brake of the above-described conventional construction is protruded forwardly from the steering knuckle and is located at a position apart from the steering axis, the moment of inertia is increased to cause a disadvantage that the steering of the handle requires an increased force.

Additionally, since the caliper brake is supported in a cantilever-fashion by the bracket on the steering knuckle, there is a problem that the bracket must be large in weight to ensure a sufficient strength. This also causes an additional increase of the moment of inertia.

Another prior art document EP-A-306 373, which corresponds to the preamble of claim 1, solves some of the prior art problems by providing a caliper brake between the steering knuckle and the front wheel. However the support of this caliper brake with respect to the connections of the supporting bracket with the steering knuckle causes a disadvantageous lever ratio resulting in a relatively high stresses in the supporting bracket. Therefore also in this case the bracket must be larged in weight to ensure a sufficient strength.

The present invention has been made in view of the foregoing circumstances. It is an object of the present invention to provide a motorcycle having a caliper brake supported by a lightweight bracket, with a good lever ratio, resulting in a reduction of the movement of inertia and in better handling and suspension.

According to the present invention, the above objectives are obtained by means of a structure wherein said caliper brake being connected with said mounting bracket at portions thereof extending forwardly and rearwardly of said steering knuckle.

The advantages of the present invention, in other major respects, are as follows:

The caliper brake 39 is disposed between the front wheel 4 and the steering knuckle 14. As a result, the caliper brake 39 is covered with the steering knuckle 14. Such a caliper brake 39 has been hitherto exposed outward. In this case, since the steering knuckle 14 has a strength sufficient to support the front wheel 4, the caliper brake 39 is soundly protected from contacting with obstacles during manual movement of the motorcycle 1 by a simple utilization of the steering knuckle 14.

The steering axis 28 of the front wheel 4 is positioned adjacent to the rotational axis of the front wheel 4. Further, the steering knuckle 14 is also generally disposed adjacent to the steering axis 28 so as to minimize the moment of inertia about the steering axis 28. Since the caliper brake 39 is disposed between the front wheel 4 and the steering knuckle 14, the caliper brake 39 is also positioned near the steering axis 28.

The caliper brake 39 is supported by the bracket 40 provided in the fore and rear portions of the steering knuckle 14. As a result, the caliper brake 39 can be supported at its both sides by the steering knuckle 14. Therefore, the strength of the bracket 40 may be lower than the conventional case in which a caliper brake is supported by a bracket to a steering knuckle in a cantilever-fashion.

In the following, the present invention is explained in greater detail by means of a preferred embodiment thereof in conjunction with the accompanying drawings, wherein:
Fig. 1 is a left side view of a front portion of a motor cycle
Fig. 2 is a vertical, cross-sectional view of a front wheel suspension device
Fig. 3 is a plan view of an upper arm
Fig. 4 is an enlarged view of a part of Fig. 1
Fig. 5 is a fragmentary view, partly in cross-section, as seen from the arrows V-V in Fig. 4

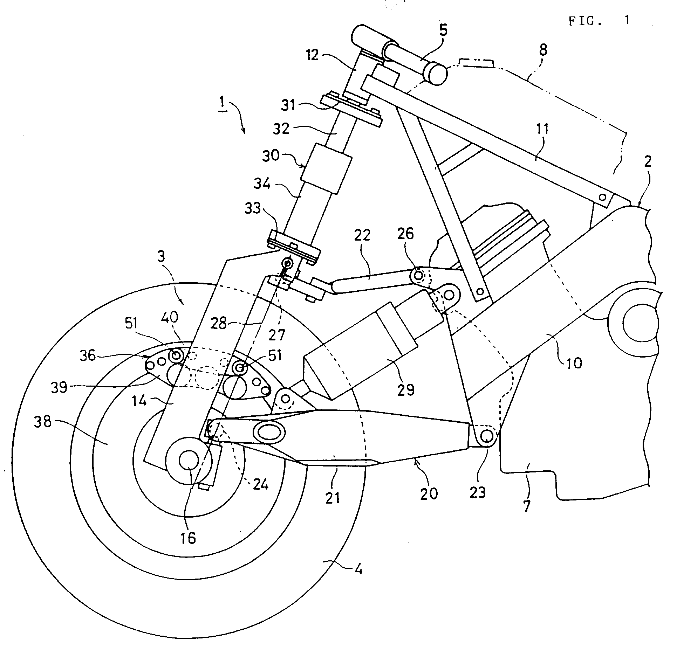

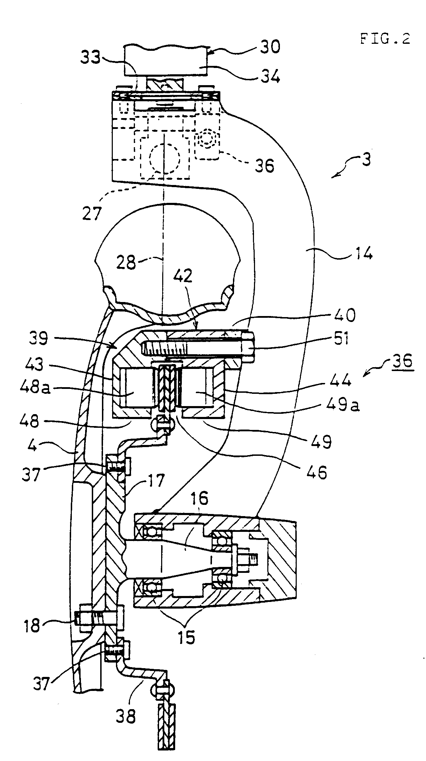

Referring to Figs. 1-3, designated as 1 is a -bicycle or motorcycle, as 2 is a body frame to the front portion of which is mounted a front wheel suspension device 3. A front wheel 4 is steerably supported by the front wheel suspension device 3. Above the front wheel suspension device 3, there is mounted a handle 5 on the body frame 2. Designated as 7 is an engine and as 8 a fuel tank.

The body frame 2 is provided with a pair of main frames 10 between which the engine 7 is sandwiched from left and right sides (as seen in the fore direction of the body (this also applies to the cases which follow)). The left and right main frames 10 are tightly connected with each other by a cross member (not shown). In a front portion of the main frame 10, there is formed a steering frame 11 which is in the form of triangle when viewed from sideward and which protrudes forwardly. A head pipe 12 is mounted on the protruded end. To the head pipe 12 is supported the handle 5.

The above-mentioned front wheel suspension device 3 is of a so called wishbone type and has a steering knuckle 14 located on the left side of the front wheel 4. A wheel shaft 16 is supported by a pair of left and right bearings 15 and 15 in the lower end of the steering knuckle 14. On the right end of the wheel shaft 16 is formed a flange 17 to which the front wheel 4 is secured by bolts 18, so that the front wheel 4 is supported by the lower end of the steering knuckle 14.

The steering knuckle 14 is vertically swingably supported in the front portion of the main frames 10 by means of a swing arm 20 of a parallel linking type. The swing arm 20 is composed of a lower arm 21 and an upper arm 22.

The lower arm 21 is vertically swingably pivoted about the pivot shaft 23 on the front lower end of the main frames 10. The lower arm 21 has a front rocking end to which the lower side of the steering knuckle 14 is pivoted by a lower ball joint 24.

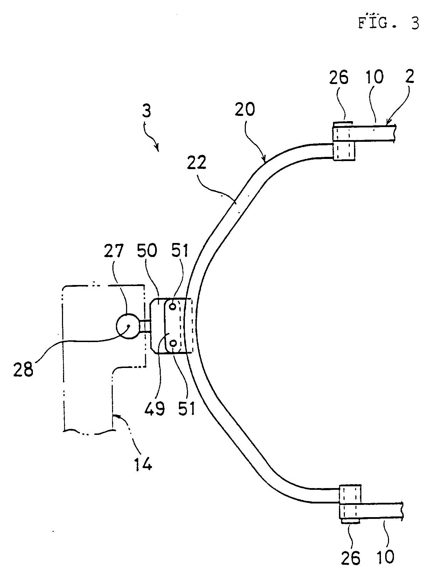

As particularly shown in Fig. 3, the upper arm 22 is in the form of a rearwardly opening fork whose left and right ends are pivoted on the left and right main frames 10 and 10, respectively, by pivot shafts 26 and 26. The upper arm 22 is vertically swingable and has a swinging end to which the upper end of the steering knuckle 14 is pivoted by an upper ball joint 27. The axis extending from the lower and upper ball joints 24 and 27 represents the steering axis 28 about which the steering knuckle 14 is steerable together with the front wheel 4.

Provided between a front upper portion of the main frame 10 and the lower arm 21 is a hydraulic shock absorber 29 to maintain the lower arm 21 in a predetermined position, namely to maintain the steering knuckle 14 in a predetermined position, by absorbing the shock transmitted from the front wheel 4 to the body frame 2 through extending and shrinking operations thereof.

A cooperating means 30 of a telescopic type is disposed between the steering knuckle 14 and the handle 5. This cooperating means 30 is composed of a sliding shaft 32 mounted to a lower end of the handle 5 through a blade spring 31 and a casing 34 mounted on an upper end of the steering knuckle 14 through a blade spring 33. The sliding shaft 32 has a protruded end axially slidably inserted into the casing 34.

Thus, by the steering of the handle 5, the front wheel 4 is steered about the steering axis 28 through the cooperating means 30 and the steering knuckle 14. During running, when the steering knuckle 14 is vertically swung, the sliding shaft 32 is slid relative to the casing 34 to absorb the variation of the vertical position of the steering knuckle 14 relative to the handle 5. Further, the blade springs 31 and 33 function to absorb the variation of the relative inclination of the steering knuckle 14, handle 5 and the cooperating means 30.

Referring to Figs. 1, 2, 4 and 5, the front wheel 4 is provided with a braking device 36 composed of a brake disc 38 fixed to the flange 17 with bolts 37, a caliper brake 39 adapted to be in frictional engagement with the brake disc 38, and a bracket 40 with which the caliper brake 39 is supported on the steering knuckle 14.

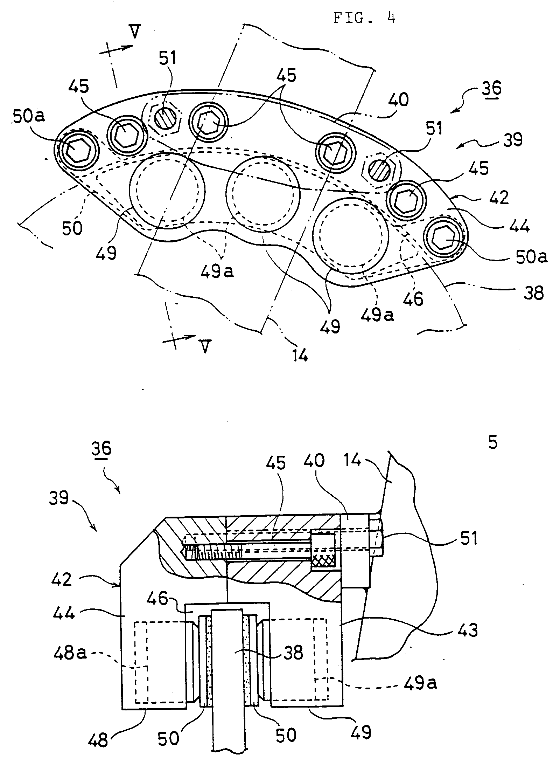

As shown in Figs. 4 and 5, the caliper brake 39 has a caliper 42 which is laterally divided into an inner caliper 43 and an outer caliper 44. These inner and outer calipers 43 and 44 are integrally united by four bolts 45. A caliper groove 46 is defined between lower portions of the inner and outer calipers 43 and 44 to accommodate an upper portion of the brake disc 38 therein.

In the caliper groove 46, there are mounted three hydraulic cylinders 48 and 49, arranged in the circumferential direction of the brake disc 38, on each of the opposing walls of the inner and outer calipers 43 and 44. These cylinders 48 and 49 have respective pistons 48a and 49a whose protruded ends are opposed to each other with an upper portion of the brake disc 38 being interposed therebetween.

A pad 50 which as a frictional material is interposed between the upper portion of the brake disc 38 and each of the pistons 48a and 49a and is leftwardly and rightwardly moveably secured by a pair of fore and rear pad pins 50a and 50a to the caliper 42.

The caliper brake 39 is disposed between the front wheel 4 and the steering knuckle 14. The bracket 40 is integrally fixed on the front wheel 4 side of the steering knuckle 14 and has fore and rear ends protruded forwardly and backwardly from the steering knuckle 14. The caliper brake 39 is fixed by fastening bolts 51 and 51 serving as fixing members to the fore and rear ends of the bracket 40, whereby the caliper brake 39 is supported on the steering knuckle 14.

Each of the hydraulic cylinders 48 and 49 is activated by operation of a brake bar provided at the handle 5. Upon braking operation, each of the pistons 48a and 49a pushes respective pad 50 and 50 to the upper portion of the brake disc 38 to cause each of the pads 50, 50 to be brought into engagement therewith, so that the front wheel 4 is braked.

In the above case, the fastening bolts 51 and 51 fix both of the inner and outer calipers 43 and 44 to more tightly bond the inner and outer calipers 43 and 44 integrally. As a consequence, at the time each of the hydraulic cylinders 48 and 49 is operated, the reaction force thereof is strongly prevented from acting to separate the inner and outer calipers 43 and 44 by the bolts 45 and fastening bolts 51.

While the foregoing is the illustrated embodiment, the front wheel suspension device 3 may be of a strut type.

In the present invention, since the caliper brake is disposed between the front wheel and the steering knuckle, the caliper brake is covered with the steering knuckle. In this case, since the steering knuckle has a strength sufficient enough to support the front wheel, the caliper brake is soundly protected from contacting with obstacles during manual movement of the motorcycle by a simple utilization of the steering knuckle.

The steering axis of the front wheel is positioned adjacent to the rotational axis of the front wheel. Further, the steering knuckle is also generally disposed adjacent to the steering axis so as to minimize the moment of inertia about the steering axis. Since the caliper brake is disposed between the front wheel and the steering knuckle, the caliper brake is also positioned near the steering axis.

Moreover, since the caliper brake is supported by the bracket provided in the fore and rear portions of the steering knuckle, the caliper brake can be supported at its both sides by the steering knuckle. Therefore, the Strength of the bracket may be lower than the conventional case in which a caliper brake is supported by a bracket to a steering knuckle in a cantilever-fashion. This permits the use of a light bracket. In this respect the moment of inertia can be prevented from being increased.

## Claims

1. Motorcycle (1) with front wheel brake arrangement comprising a steering knuckle (14) located at one side of a front wheel (4) for supporting same, a swing arm (20) with which said steering knuckle (14) is vertically moveably supported by a body frame (2), a brake disc (38) provided for rotation with said front wheel (4) and a caliper brake (39) adapted to frictionally engage the brake disc (38) and supported on a bracket (40) mounted on said steering knuckle (14), whereby said caliper brake (39) is disposed between said front wheel (28) and said steering knuckle (14), **characterised in that** said caliper brake (39) being connected with said mounting bracket (40) at portions (40a,40b) thereof extending forwardly and rearwardly of said steering knuckle (14).

2. Motorcycle (1) as claimed in claim 1 **characterised in that** the mounting bracket (40) is integrally fixed on the front wheel side of the steering knuckle (14) whereas the caliper brake (39) is fixed by fastening bolts (51) to said mounting bracket (40).

3. Motorcycle (1) as claimed in claims 1 or 2, **characterised in that** the caliper brake (39) comprises a caliper (42) which is laterally divided into an inner caliper (43) and an outer caliper (44) both being integrally united by bolts (45).

4. Motorcycle (1) as claimed in at least one of the preceding claims 1 to 3, **characterised in that** a caliper groove (46) is defined between lower portions of the inner and outer calipers (43,44) accommodating an upper portion of the brake disc (38) therein.

5. Motorcycle (1) as claimed in claim 4 **characterised in that**, a plurality of hydraulic cylinders (48,49) disposed side by side in the circumferential direction of the brake disc (38) is provided on each of the opposing walls of the inner and outer calipers (43,44).

6. Motorcycle (1) as claimed in claim 5, **characterised in that** the hydraulic cylinders (48,49) receive pistons (48a,49a) whose protruded ends are opposed to each other with a pad (50) made of frictional material being interposed between the upper portion of the brake disc (38) and each of the pistons (48a,49a), moveably secured to the caliper (42) by a pair of fore and rear pad pins (50a).

7. Motorcycle (1) as claimed in at least one of the claims 1 to 6, **characterised in that** a wheel shaft (16) is supported by a pair of left and right bearings (15) in the lower end of the steering knuckle (14) while on one side of the wheel shaft (16) a flange (17) is formed to which the front wheel (4) is secured by bolts (18) to support the front wheel (4) by the lower end of the steering knuckle (14).

8. Motorcycle (1) as claimed in at least one of the preceding claims 1 to 7 **characterised in that**, the steering knuckle (14) is vertically swingably supported in the front portion of a pair of main frames (10) by means of a swing arm (20) of a parallel linking-type, said swing arm (20) being composed of a lower arm (21) and an upper arm (22), both being vertically swingably pivoted about a pivot shaft (23) on the lower front end of the main frames (10) and upper pivot shafts (26), respectively, pivotally supporting the fork shaped upper arm (22).

9. Motorcycle (1) as claimed in claim 8, **characterised in that** the lower and upper arms (21,22) are attached to the steering knuckle (14) by means of ball joints (24,27) defining a steering axis (28), while a hydraulic shock absorber (29) is provided between an upper front portion of the main frame (10) and the lower arm (21) to maintain the steering knuckle (14) in a predetermined position.

10. Motorcycle (1) as claimed in claims 8 or 9, **characterised in that**, a co-operating means (30) of the telescopic type is provided composed of a sliding shaft (32), mounted to a lower end of a steering handle (5) through a blade spring (31), and a casing (34), mounted to an upper end of the steering knuckle (14) through another blade spring (33).

## Patentansprüche

1. Motorrad (1) mit einer Vorderradbremsanordnung umfassend einen Lenkhebel (14), der an einer Seite eines Vorderrades (4) zur Halterung derselben angeordnet ist, einen Schwenkarm (20), mit welchem der Lenkhebel (14) vertikal bewegbar von einem Rahmenkörper (2) gehaltert ist, eine Bremsscheibe (38), die drehbar mit diesem Vorderrad (4) angeordnet ist, und eine Sattelbremse (39), die in Reibeingriff mit der Bremsscheibe (38) gelangen kann und von einem Träger (40) gehaltert ist, der an dem Lenkhebel (14) befestigt ist, wobei die Sattelbremse (39) zwischen dem Vorderrad (28) und dem Lenkhebel (14) angeordnet ist, **dadurch gekennzeichnet,** daß die Sattelbremse (39) mit dem Befestigungsträger (40) an Abschnitten (40a,40b) desselben verbunden ist, die sich von dem Lenkhebel (14) nach vorne und nach hinten erstrecken.

2. Motorrad (1) nach Anspruch 1, **dadurch gekennzeichnet,** daß der Befestigungsträger (40) einheitlich an der Vorderradseite des Lenkhebels (14) befestigt ist, wohingegen die Sattelbremse (39) mittels Befestigungsbolzen (51) an dem Befestigungsträger (40) angeschlossen ist.

3. Motorrad (1) nach Anspruch 1 oder 2, **dadurch gekennzeichnet,** daß die Sattelbremse (39) einen Sattel (42) enthält, der seitlich aufgeteilt ist in einen inneren Sattel (43) und in einen äußeren Sattel (44), die beide einheitlich mittels Bolzen (45) miteinander verbunden sind.

4. Motorrad (1) nach mindestens einem der vorstehenden Ansprüche 1 bis 3, **dadurch gekennzeichnet,** daß eine Sattelnut (46) zwischen unteren Abschnitten der inneren und äußeren Sattel (43,44) ausgebildet ist, welche einen oberen Abschnitt der Bremsscheibe (38) in sich aufnimmt.

5. Motorrad (1) nach Anspruch 4, **dadurch gekennzeichnet,** daß eine Vielzahl von Hydraulikzylindern (48,49) in Umfangsrichtung der Bremsscheibe (38) nebeneinander angeordnet an jeder der einander gegenüberliegenden Wandungen der inneren und äußeren Sattel (43,44) vorgesehen sind.

6. Motorrad (1) nach Anspruch 5, **dadurch gekennzeichnet,** daß die Hydraulikzylinder (48,49) Kolben (48a,49a) aufnehmen, deren vorstehenden Enden einander gegenüberliegend angeordnet sind, wobei ein Bremsbelag (50) aus Reibungsmaterial zwischen dem oberen Abschnitt der Bremsscheibe (38), und jedem dieser Kolben (48a,49a) angeordnet und bewegbar an dem Sattel (42) mit einem Paar vorderer und hinterer Belagzapfen (50a) angeschlossen sind.

7. Motorrad (1) nach mindestens einem der vorstehenden Ansprüche 1 bis 6, **dadurch gekennzeichnet,** daß eine Radachse (16) von einem Paar linker und rechter Lager (15) in einem unteren Ende des Lenkhebels (14) gelagert ist, während auf einer Seite der Radachse (16) ein Flansch (17) ausgebildet ist, an dem das Vorderrad (4) mit Bolzen (18) befestigt ist, um das Vorderrad (4) durch das untere Ende des Lenkhebels (14) zu haltern.

8. Motorrad (1) nach mindestens einem der vorstehenden Ansprüche 1 bis 7, **dadurch gekennzeichnet,** daß der Lenkhebel (14) in dem vorderen Abschnitt eines Paares von Hauptrahmen (10) mittels eines Schwenkarmes (20) des Parallelverbindungstyps vertikal schwenkbar gelagert ist, der Schwenkarm (20) aus einem unteren Arm (21) und einem oberen Arm (22) besteht, die beide vertikal um eine Schwenkachse (23) verschwenkbar am unteren Vorderende der Hauptrahmen (10) bzw. oberen Schwenkachsen (26) angelenkt sind, welche den gabelförmig ausgebildeten oberen Arm (22) verschwenkbar lagern.

9. Motorrad (1) nach Anspruch 8, **dadurch gekennzeichnet,** daß die unteren und oberen Arme (21,22) durch eine Steuerachse (28) definierende Kugelgelenke (24,27) an dem Lenkhebel (14) angeschlossen sind, während ein hydraulischer Stoßdämpfer (29) zwischen einem oberen Vorderabschnitt des Hauptrahmens (10) und dem unteren Arm (21) vorgesehen ist, um den Lenkhebei (14) in einer vorbestimmten Position zu halten.

10. Motorrad (1) nach Anspruch 8 oder 9, **dadurch gekennzeichnet,** daß eine Zusammenwirkeinrichtung (30) des Teleskoptyps angeordnet ist, die aus einer Schiebewelle (32), die an einem unteren Ende einer Lenkstange (5) mittels einer Blattfeder (31) angeschlossen ist, und aus einem Gehäuse (34) besteht, welches an einem oberen Ende des Lenkhebels (14) mittels einer weiteren Blattfeder (33) befestigt ist.

## Revendications

1. Motocyclette (1) pourvue d'un agencement de frein de roue avant comportant une articulation de direction (14) située d'un côté d'une roue avant (4) pour la soutenir, un bras oscillant (20) avec lequel ladite articulation de direction (14) est soutenue avec possibilité de se déplacer verticalement par un cadre de bâti (2), un disque (38) de frein prévu pour tourner avec ladite roue avant (4) et un frein (39) à étrier adapté pour entrer en contact en frottant avec le disque (38) de frein et soutenu sur un support (40) monté sur ladite articulation de direction (14), ledit frein (39) à étrier étant placé entre ladite roue avant (28) et ladite articulation de direction (14),
**caractérisée en ce que**
ledit frein (39) à étrier est relié audit support (40) de montage en des parties (40a, 40b) de celui-ci s'étendant vers l'avant et vers l'arrière de ladite articulation de direction (14).

2. Motocyclette (1) selon la revendication 1,
**caractérisée en ce que**
le support (40) de montage est fixé au côté roue avant de l'articulation de direction (14), en faisant corps avec elle, tandis que le frein (39) à étrier est fixé par des goujons de serrage (51) audit support de montage (40).

3. Motocyclette (1) selon la revendication 1 ou 2,
**caractérisée en ce que**
le frein (39)à étrier comporte un étrier (42) qui est divisé latéralement en un étrier intérieur (43) et un étrier extérieur (44), tous deux étant unis par des boulons (45) de manière à constituer une pièce unique.

4. Motocyclette (1) selon l'une au moins des revendications précédentes,
**caractérisée en ce que**
une rainure (46) d'étrier est définie entre des parties inférieures des étriers intérieurs et extérieurs (43, 44) et reçoit une partie supérieure du frein (38) à disque.

5. Motocyclette (1) selon la revendication 4,
**caractérisée en ce que**
une pluralité de cylindres hydrauliques (48, 49) disposés côte à côte dans la direction de la circonférence du disque (38) de frein est prévue sur chacune des parois opposées des étriers intérieur et extérieur (43, 44)

6. Motocyclettte (1) selon la revendication 5,
**caractérisée en ce que**
les cylindres hydrauliques (48, 49) reçoivent des pistons (48a, 49a) dont les extrémités en saillie sont opposées l'une à l'autre, un patin (50) en matériau à friction étant interposé entre la partie supérieure du disque (38) de frein et chacun des pistons (48a, 49a), étant fixé à l'étrier (42), avec possibilité de déplacement, par une paire de tiges (50a) de patin avant et arrière.

7. Motocyclette (1) selon l'une au moins des revendications 1 à 6,
**caractérisée en ce que**
un arbre (16) de roue est soutenu par une paire de roulements à billes (15) gauche et droit dans l'extrémité inférieure de l'articulation de direction (14), tandis que, sur un côté de l'arbre (16) de roue, est formé un plateau (17), auquel la roue avant (4) est fixée par des boulons (18) pour soutenir la roue avant (4) par l'extrémité inférieure de l'articulation de direction (14).

8. Motocyclette (1) selon l'une au moins des revendications précédentes 1 à 7,
**caractérisée en ce que**
l'articulation de direction (14) est soutenue en pouvant osciller verticalement dans la partie avant d'une paire de cadres principaux (10) au moyen d'un bras (20) oscillant d'un type à liaison parallèle, ledit bras (20) oscillant étant composé d'un bras inférieur (21) et d'un bras supérieur (22), tous deux étant montés sur pivot avec possibilité d'osciller verticalement autour d'un arbre (23) de pivotement sur l'extrémité avant inférieure des cadres principaux (10) et d'arbres (26) de pivotement supérieurs respectifs soutenant avec possibilité de pivoter le bras supérieur (22) en forme de fourche.

9. Motocyclette (1) selon la revendication 8,
**caractérisée en ce que**
les bras inférieur et supérieur (21, 22) sont attachés à l'articulation de direction (14) au moyen de joints à rotule (24, 27) définissant un axe de direction (28), tandis qu'un amortiseur hydraulique (29) est prévu entre une partie avant supérieure du cadre principal (10) et le bras inférieur (21) pour maintenir l'articulation de direction (14) dans une position prédéterminée.

10. Motocyclette (1) selon les revendication 8 ou 9,
**caractérisée en ce que**
il est prévu un moyen (30) de coopération du type téléscopique, composé d'un arbre coulissant (32), monté à une extrémité inférieure d'une poignée de commande (5) par l'intermédiaire d'un ressort à lames (31), et un boîtier (34), monté à une extrémité supérieure de l'articulation de direction (14) par l'intermédiaire d'un autre ressort à lames (33).
